# EUROPEAN PATENT SPECIFICATION

(11) **EP 3 296 189 B1**
(45) Date of publication and mention of the grant of the patent: **28.08.2019**
(21) Application number: 17188211.1
(22) Date of filing: 28.08.2017
(51) Int. Cl.: B62L 3/08, B62L 3/02, B60T 11/04, B60T 11/06, B60T 8/26, F16D 125/60, F16D 125/64, F16D 125/68

(54) **BICYCLE BRAKE ASSIST**
FAHRRADBREMSHILFE
ASSISTANCE AU FREINAGE DE BICYCLETTE

(30) Priority: 14.09.2016 TW 105129983
(43) Date of publication of application: 21.03.2018
(73) Proprietor: Wu, Dong-Her, Chang-Hua Hsien (TW)
(72) Inventor: Wu, Dong-Her, Chang-Hua Hsien (TW)
(74) Representative: Lang, Christian

(56) References cited:
- CH-A- 208 677
- TW-U- M 374 432
- US-A- 5 927 442
- US-A- 6 098 486
- US-A1- 2012 234 633
- US-A1- 2014 202 802

## Description

### BACKGROUND OF INVENTION

### Field of the Invention

The present invention relates to a bicycle brake assist, more particularly to a bicycle brake assist that has the effect of braking the rear wheel first and the front wheel next.

### Brief Description of Prior Art

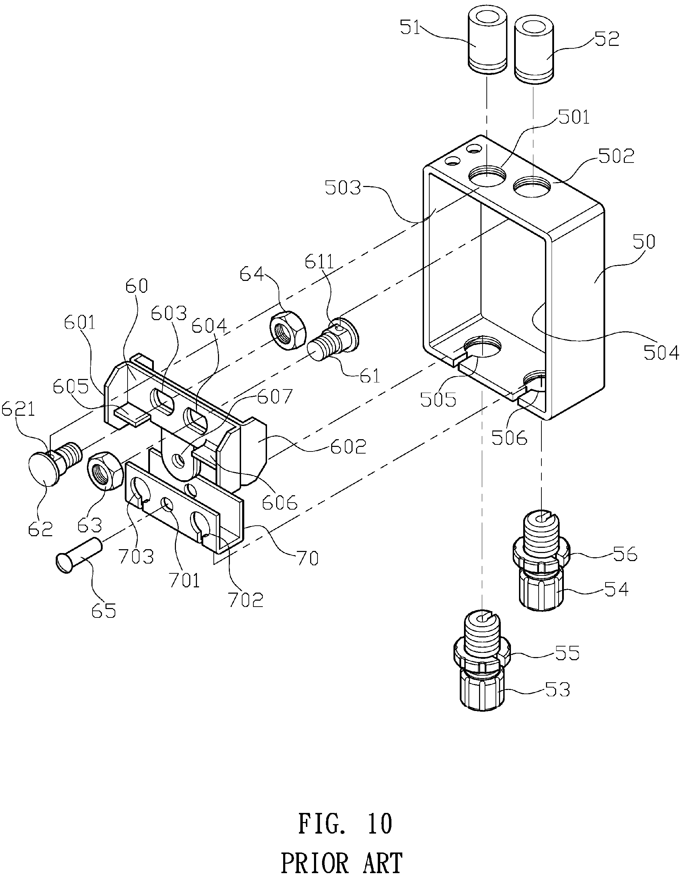

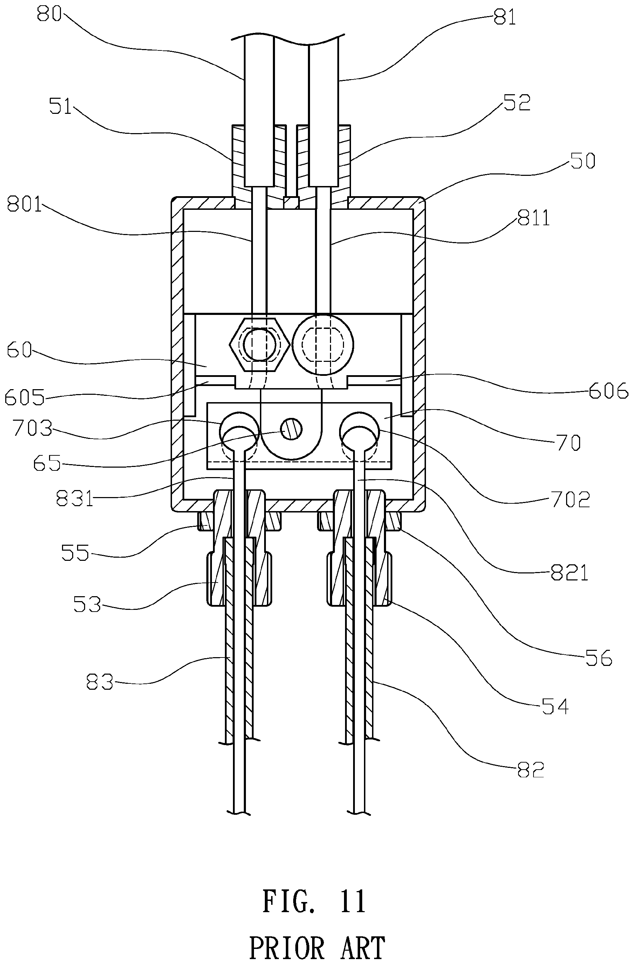

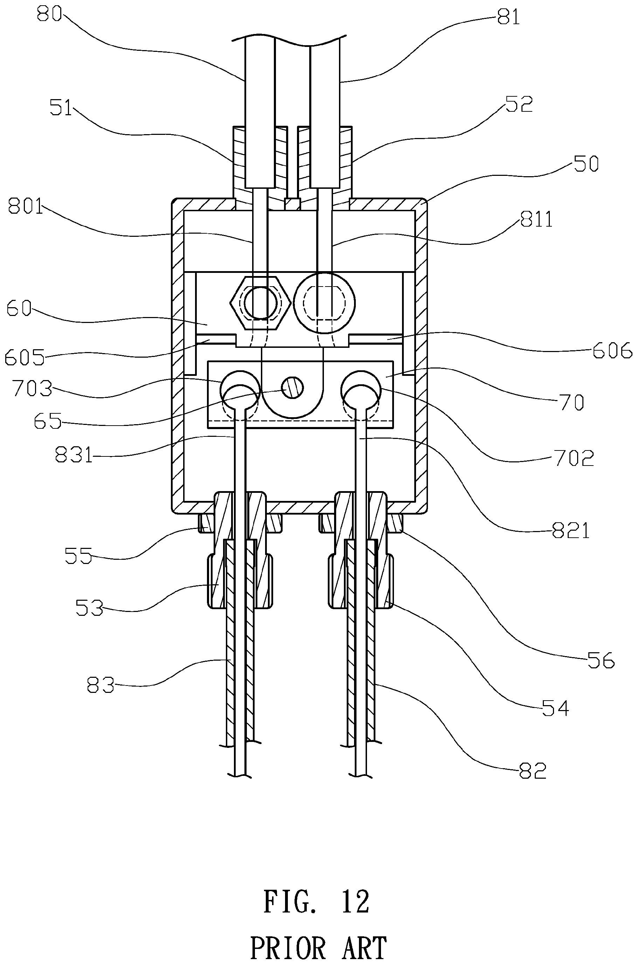

Currently, conventional bicycle brake structure, such as one shown in Figure 10, Figure 11, Figure 12 or the other one disclosed in Taiwanese Patent M374432, comprises a casing 50 having two brake wire inlet holes 501, 502 provided on the upper end thereof and coupling sleeves 51,52 mounted on the holes 501,502. Sliding surfaces 503, 504 parallel to each other are provided on opposite sides of the casing 50. A sliding frame 60 having front and rear brake wire outlet holes 505, 506 provided on the lower end thereof is assembled inside the casing 50. Adjustment bolts 53, 54 are provided on the outlet holes 505, 506. Two planes 601, 602 parallel to each other are provided oppositely on both sides of the sliding frame 60 in such a manner that the two planes 601, 602 are slidably fitted on the sliding surfaces 503, 504 of the casing 50. The sliding frame 60 is provided with two threaded holes 603, 604 through which wire fixing screws 61, 62 can be engaged separately with wire fixing nuts 63, 64. The sliding frame 60 has stopping plates 605, 606 provided oppositely at inner sides of the centerline thereof for stopping a moving lever 70, and a fixing hole 607 provided at the lower end thereof, and a fixing bolt 65 is connected with the moving lever 70 in the fixing hole 607. The moving lever 70 has a rotation central hole 701 provided at the middle thereof, and the fixing bolt 65 is connected with the sliding frame 60 in the rotation central hole 701. Moreover, the moving lever 70 has front and rear brake wire slots 702, 703 provided respectively on both sides thereof. Thus, a conventional bicycle brake structure is formed by assembling the abovementioned components together.

The above conventional bicycle brake structure has left and right brake wire inlet holes 501, 502 provided on the upper side of the casing 50, and coupling sleeves 51, 52 being assembled on the inlet holes 501, 502 so as to receive left, right brake cable tubes 80, 81. The left and right brake cable tubes 80, 81 have left and right brake wires 801, 811 which are inserted respectively in the inside thereof, and the left and right brake steel wires 801, 811 are further pulled through wire holes 611, 621 provided respectively on the wire fixing bolts 61, 62. Finally, the wire fixing nuts 63, 64 are threaded tightly so as to lock the left and right brake steel wires 801, 811. The heads of the left and right brake steel wires 801, 811 are coupled separately to the left and right brake levers. Furthermore, the casing 50 has wire outlet holes 505, 506 provided at the lower end thereof for mounting adjustment bolts 53, 54. Then, the adjustment bolts 53, 54 are locked by nuts 55, 56 in position. Next, a front brake clip sheath 82 and a rear brake clip sheath 83 are respectively inserted into the lower ends of the adjustment bolts 53, 54, then front and rear brake steel wires 821, 831 are separately inserted in the front and rear brake clip sheathes 82, 83, and the head portions of the front and rear brake steel wires 821, 831 are put separately into the slots 702, 703 of the moving lever 70, and the tail portions of the front and rear brake steel wires 821, 831 are coupled separately to the front, rear brake clips. Then, the assembly is completed.

When the right brake lever is pressed, the right brake steel wire 811 will be pulled. As the right brake steel wire 811is pulled through the wire fixing screw 61 and fixed on the sliding frame 60, the sliding frame 60 is moved upward so as to move the fixing bolt 65, the moving lever 70, the rear brake steel wire 831 and the front brake steel wire 821 simultaneously, and the front, rear brake clips are activated so as to achieve synchronous braking effect. Moreover, as the lever arm from the front brake slot 702 to the lever rotation central hole 701 is long, output force is relatively smaller; while the lever arm from the rear brake slot 703 to the lever rotation central hole 701 is short, so output force is relatively larger. When fully emergency braking is undertaken, the rear brake is locked first and then the front brake is locked in turn. The effect of this front brake locking delay can reduce the chance of plunging forward. When the left brake is pulled, the effect is the same as pulling the right brake. Therefore, the danger of plunging forward due to wrong side braking can be avoided.

However, the abovementioned conventional structure still has some problems in its practical implementation described below. During braking operation, the left brake wire 801 and the right brake wire 811 are not aligned with the central position of the sliding frame 60, when they are pulled upward. Thus, the sliding frame 60 will be tilted during the pulling upward process of the left brake steel wire 801 or the right brake steel wire 811. By closing contact of the planes 601, 602 of the sliding frame 60 with the sliding surface 503, 504 of the casing, the sliding frame 60 will rather over-rub the inner wall of the casing when the sliding frame 60 is tilted. In this case, the dual brake structure cannot be operated smoothly; even in serious condition, the sliding frame 60 may be entirely locked, which may cause danger to the rider.

### Summary of the invention

It is apparent from the above description that the conventional sliding frame cannot be operated smoothly in the casing.

In view of the above problem, the present invention provides a novel bicycle brake assist, comprising a main body, a traction device, two control cables, a rear brake cable and a front brake cable, wherein the traction device has a moving block and a rotary piece pivotally connected with each other, and wherein the main body has a first surface and a second surface. The first surface is provided with a chamber which is depressed toward the interior of the main body. When the traction device is installed in the chamber and the control cables, the rear brake cable and the front brake cable are connected in place, a cover plate is combined with the first surface to enclose the chamber. On the front and rear side of the chamber, two slot-shape grooves opposite to each other are separately provided on the center of the cover plate and the center of the main body. Two first through holes communicating with the chamber and mutually adjacent in left and right direction are provided on the upper side of the main body. A second through hole and a third through hole communicating with the chamber and mutually adjacent in front and rear direction are provided on the lower side of the main body. The moving block has a front end portion and a rear end portion, and a central axle projecting out of the front and rear end portions is provided at the center of the moving block. When the moving block is placed into the chamber, the central axle is engaged in the slot-shape grooves separately of the cover plate and the main body, so as to keep the moving block in position. By the mutual constraint of central axle and the slot-shape grooves, the moving block can conduct limited up-down movement in the chamber. Further, the moving block has two first engagement holes provided on the upper edge thereof and spaced apart equally from the center of the upper edge, and a second engagement hole provided on the center of the bottom edge. Escape chamfers provided on the bottom edge of the moving block are separately provided on both sides of the second engagement hole. The rotary piece has a pivot slot provided at the center of the surface thereof und extending upward, and a third engagement hole provided at the bottom portion thereof. The rotary piece is pivotally connected with the moving block in the chamber of the main body by inserting the central axle through the pivot slot of the rotary piece. Under pivot connection with the moving block, the rotary piece abuts on the front end portion of the moving block so as to be adjacent to the cover plate. Each control cable has a control wire encapsulated therein. The two control wires are coupled separately to two brake levers at one end and locked separately in the two first engagement holes of the moving block at the other end after being pulled into the chamber through the two first through holes of the main body. The rear wheel brake cable has a rear wheel brake wire encapsulated therein. The rear wheel brake wire is coupled to the rear wheel brake at one end and locked in the second engagement hole of the moving block at the other end after being pulled into the chamber from the second through hole of the main body. The front wheel brake cable has a front wheel brake wire encapsulated therein. The front wheel brake wire is coupled to the front wheel brake at one end and locked in the third engagement hole of the moving block at the other end after being pulled into the chamber from the third through hole of the main body. In this manner, the bicycle assist of the present invention is accomplished.

### BRIEF DESCRIPTION OF THE DRAWINGS

Figure 1 is a perspective assembly view of the present invention.
Figure 2 is a perspective exploded view of the present invention.
Figure 3 is a perspective view showing the moving block of the present invention from another viewing angle.
Figure 4 is a sectional view of the assembly of the present invention.
Figure 5 is a sectional view of the assembly of the present invention from another viewing angle.
Figure 6 is an in-use state of the present invention assembled on a bicycle.
Figure 7 is a schematic view showing the action of pressing the right brake lever of the present invention.
Figure 8 is a schematic view showing the action of pressing the left brake lever of the present invention.
Figure 9 is a schematic view showing the action of simultaneously pressing both of the brake levers of the present invention.
Figure 10 is a perspective exploded view of a conventional structure.
Figure 11 is a sectional view of the assembly of a conventional structure.
Figure 12 is a schematic view showing the braking action of a conventional structure.

### DETAILED DESCRIPTION OF PREFERRED EMBODIMENTS

The object, technical features and effect of implementation of the present invention will become more apparent by the detailed description of the following embodiment in conjunction with accompanying drawings.

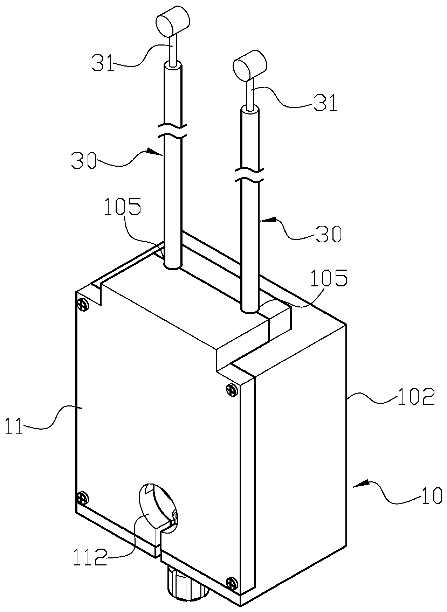

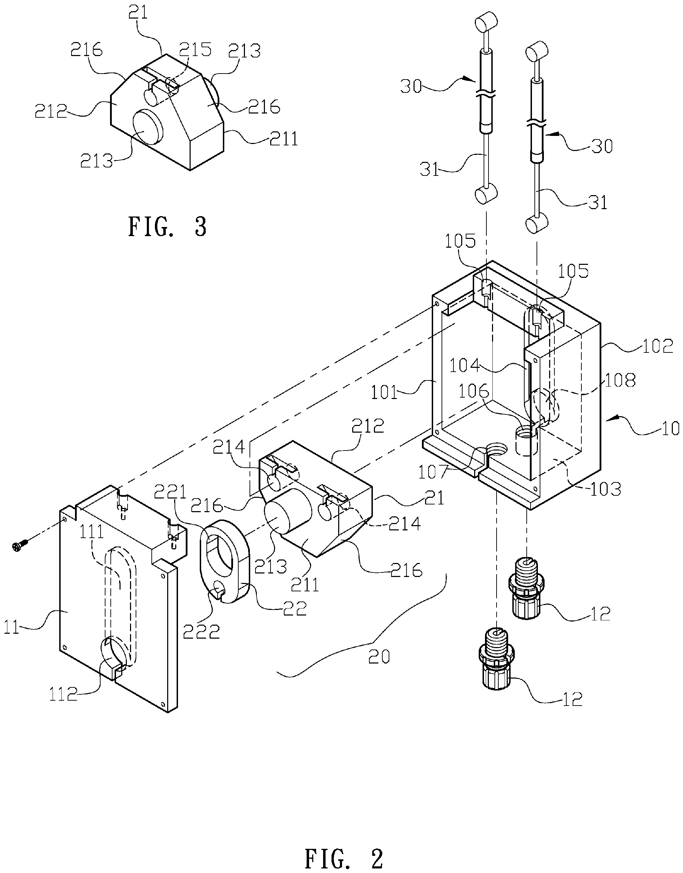

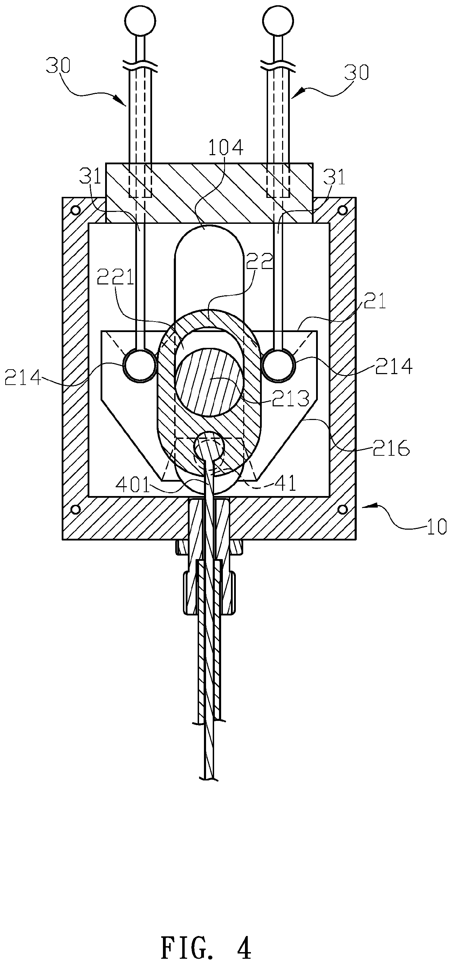

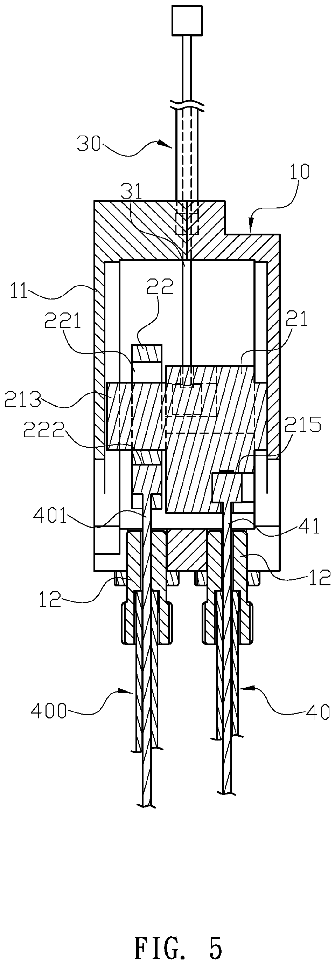

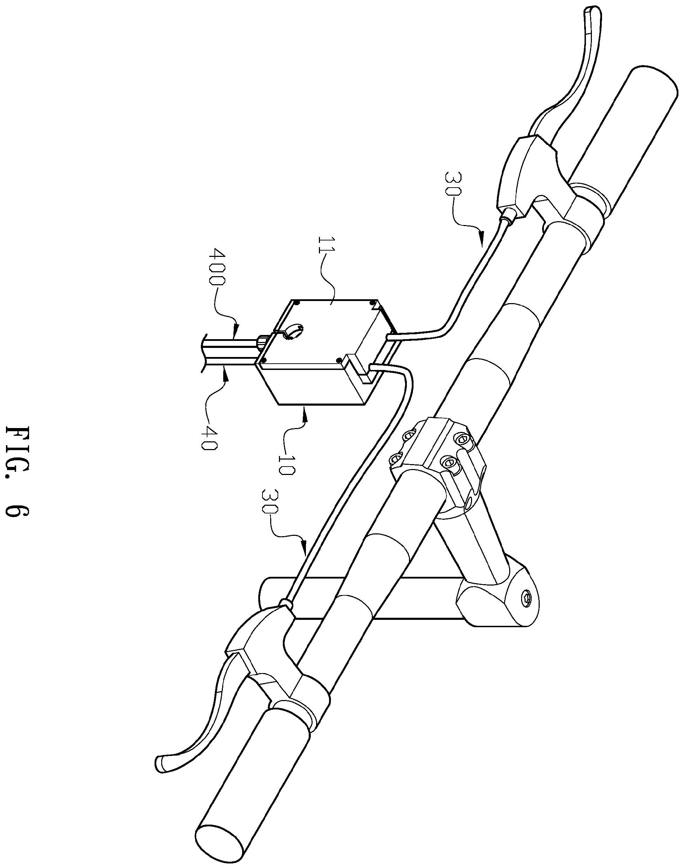

As shown in Figure 1 to 6 according to the present invention, the bicycle brake assist comprises a main body 10, a traction device 20, two control cables 30, a rear wheel brake cable 40 and a front wheel brake cable 400, wherein the traction device 20 has a moving block 21 and a rotary piece 22 pivotally connected with each other, and wherein the main body 10 has a first surface 101 and a second surface 102. The first surface 101 is provided with a chamber 103 which is depressed toward the interior of the main body 10. When the traction device 20 is installed in the chamber 103 and the control cables 30, the rear wheel brake cable 40 and the front wheel brake cable 400 are connected in place, a cover plate 11 is combined with the first surface 101 to enclose the chamber 103. On the front and rear side of the chamber, two slot-shape grooves 104, 111 opposite to each other are separately provided on the center of the cover plate 11 and the center of the main body 10. Two first through holes 105 communicating with the chamber 103 and mutually adjacent in left and right direction are provided on the upper side of the main body 10. A second through hole 106 and a third through hole 107 communicating with the chamber 103 and mutually adjacent in front and rear direction are provided on the lower side of the main body 10. The moving block 21 has a front end portion 211 and a rear end portion 212, and a central axle 213 projecting out of the front and rear end portions 211, 212 is provided at the center of the moving block 21. When the moving block 21 is placed into the chamber 103, the central axle 213 is engaged in the slot-shape grooves 104, 111 separately of the cover plate 11 and the main body 10, so as to keep the moving block 21 in position. By the mutual constraint of central axle 213 and the grooves 104, 111, the moving block 21 can conduct limited up-down movement in the chamber 103. Further, the moving block 21 has two first engagement holes 214 provided on the upper edge thereof and spaced apart equally from the center of the upper edge, and a second engagement hole 215 provided on the center of the bottom edge. Escape chamfers 216 provided on the bottom edge of the moving block 21 are separately provided on both sides of the second engagement hole 215. The rotary piece 22 has a pivot slot 221 provided at the center of the surface thereof and extending upward, and a third engagement hole 222 provided at the bottom portion thereof. The rotary piece 22 is pivotally connected with the moving block 21 by inserting the central axle 213 through the slot 221 of the rotary piece 22. Under pivot connection with the moving block 21, the rotary piece 22 abuts on the front end portion 211 of the moving block 21 so as to be adjacent to the cover plate 11. Each control cable 30 has a control wire 31 encapsulated therein. The two control wires 31 are coupled separately to brake levers at one end locked separately in the two first engagement holes 214 of the moving block 21 at the other end after being pulled into the chamber 103 through the two first through holes 105 of the main body 10. The rear wheel brake cable 40 has a rear wheel brake wire 41 encapsulated therein. The rear wheel brake wire 41 is coupled to the rear wheel brake at one end and locked in the second engagement hole 215 of the moving block 21 at the other end after being pulled into the chamber 103 through the second through hole 106 of the main body 10.
The front wheel brake cable 400 has a front wheel brake wire 401 encapsulated therein. The front wheel brake wire 401 is coupled to the front wheel brake at one end and locked in the third engagement hole 222 of the rotary piece 22 at the other end after being pulled into the chamber 103 through the third through hole 107 of the main body 10.

The present invention provides a bicycle brake assist, wherein the main body 10, the cover plate 11, the traction device 20, the control cables 30, the rear wheel brake cable 40 and the front wheel brake cable 400 can be optionally installed directly before leaving factory.

Furthermore, the present invention provides a bicycle brake assist, wherein the main body 10, the cover plate 11, the traction device 20 and the control cables 30 can be additionally installed on an old bicycle. In conducting this additional installation, the rear wheel brake cable 40 originally installed between the brake lever and the rear brake is changed to be installed between the moving block 21 and the rear brake, and the front wheel brake cable 400 originally installed between the brake lever and the front brake is changed to be installed between the rotary piece 22 and the front brake, and then the connection of the two control cables 30 are fixed up so as to finish this additional installation.

Furthermore, the present invention provides a bicycle brake assist, wherein the second through hole 106 and the third through hole 107 of the main body 10 are respectively provided with an adjustment thread 12 provided thereon, so that the rear brake wire 41 and the front brake wire 401 can be finely adjusted with regard to the tightness.

Furthermore, the present invention provides a bicycle brake assist, wherein the slot-shaped grooves 104, 111 of the main body 10 and the cover plate 11 are provided respectively with a wire insertion hole 108, 112 on their distal ends.

Furthermore, the present invention provides a bicycle brake assist, wherein the first through holes 105 are formed by opposite engagement of the main body 10 and the cover plate 11.

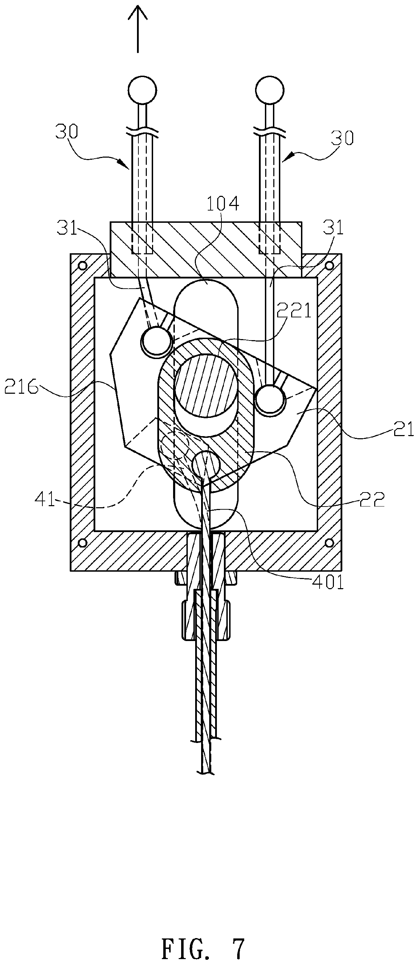

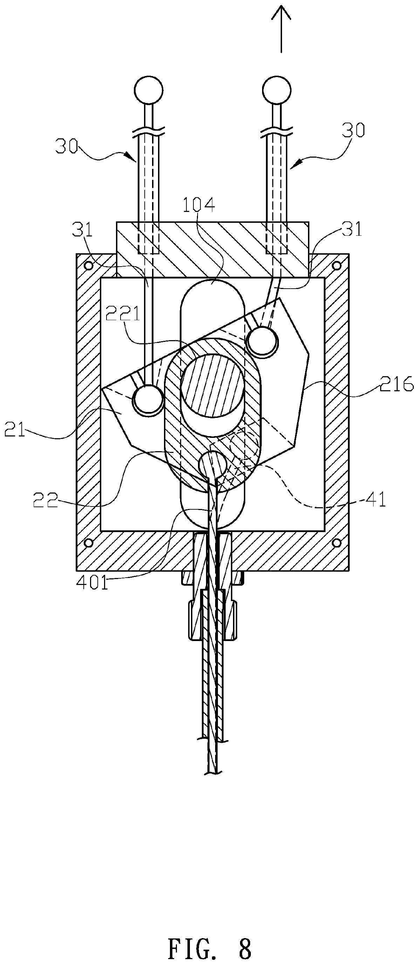

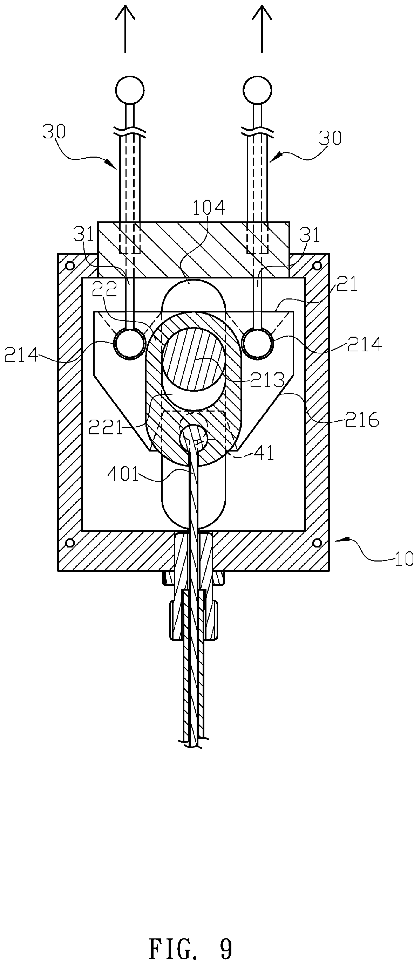

In practical implementation, when the right brake lever is pressed, the right side of the moving block 21 will be pulled upward to cause tilt-up through the control cable 31 of the same side (see Figure 7), so that the rear wheel brake wire 41 will be pulled first by the angle difference of the tilt and the delay effect of the pivot slot 221. Through continually pressing the brake lever, the moving block 21 brings the rotary piece 22 to move upward, so that the front brake wire 401 can be pulled next. By pulling the brake wires 41, 401 on different points in time, the effect of braking the rear wheel first and the front wheel later can be achieved. Contrary to this, braking the front wheel first and the rear wheel later may cause unbalance of the rider or the bicycle that may result in plunging forward or falling down to either side. By means of the pivot connection of the rotary piece 22 and the moving block 21, the rotary piece 22 can conduct self-alignment during the pull-up process. Alternatively, the left side of the moving block 21 will be pulled upward to cause tilt-up through the control cable 31 of the same side (see Figure 8), when one presses the left brake level. In this manner, the bicycle brake assist of the present invention can achieve the same effect of braking the rear wheel first and the front wheel later. Moreover, the escape chamfer 216 on the moving block 21 can avoid improper rubbing of the right side or left side of the moving block 21 with the main body 10 or even dead locking. Thus, the bicycle brake assist of the present invention can be operated very smoothly. Additionally, by the delay effect of the pivot slot 221, the effect of braking the rear wheel first and the front wheel later can be achieved, even when the two brake lever are simultaneously applied for braking (see Figure 9).

Based on the foregoing description, the bicycle brake assist of the present invention has following advantages.
(1) When pressing the brake lever to apply braking, no dead lock of the moving block 21 will occur in the whole process of pulling up the control cable 31. In the implementation of the present invention, the operation of the bicycle brake assist of the present invention can be conducted more smoothly.
(2) With cooperation of the main body 10 and the traction device 20, it is possible to achieve specific advantages of simple structure, rapid assembly, and low use costs.
(3) When applying braking, the effect of braking the rear wheel first and the front wheel later can be achieved. So, braking the front wheel first and the rear wheel later, that may cause unbalance of the rider or the bicycle or cause plunging forward or falling down to either side, can be avoided. It's relatively safe to ride bicycle.
(4) When applying braking, the cases of pressing either the left brake lever or the right brake lever first, or the case of simultaneously pressing both brake levers can achieve the same effect of braking the rear wheel first and the front wheel later. Relatively, it is not necessary to remember and distinguish the pressing order of the two brake levers, so that best convenience in use and shortening of the press time in braking can be achieved.
(5) The rotary piece 22 can conduct self-alignment when the moving block 21 tilts and moves upward. This can avoid the front wheel brake wire 401 being forcibly pulled to one side which causes damage of the components easily.

While the present invention has been described by preferred embodiments in conjunction with accompanying drawings, it should be understood that the embodiments and the drawings are merely for descriptive and illustrative purpose, not intended for restriction of the scope of the present invention defined by the appended claims.

## Claims

1. A bicycle brake assist, comprising a main body (10), a traction device (20), two control cables (30), a rear wheel brake cable (40) and a front wheel brake cable (400), wherein said traction device (20) has a moving block (21) and a rotary piece (22) pivotally connected with each other,
**characterised in that**
said main body (10) has a first surface (101) and a second surface (102), said first surface (101) being provided with a chamber (103) which is depressed toward the interior of said main body (10); when said traction device (20) is installed in said chamber (103) and said control cables (30), said rear wheel brake cable (40) and said front wheel brake cable (400) are connected in place, a cover plate (11) is combined with said first surface (101) to enclose said chamber (103); two slot-shape grooves (104, 111) opposite to each other are separately provided on the center of said cover plate (11) and the center of said main body (10); two first through holes (105) communicating with said chamber (10) and mutually adjacent to each other in left and right direction are provided on the upper side of said main body (10); a second through hole (106) and a third through hole (107) communicating with said chamber (103) and adjacent to each other in front and rear direction are provided on the lower side of said main body (10);
said moving block (21) has a front end portion (211) and a rear end portion (212), and a central axle (213) projecting out of said front and said rear end portions (211, 212) is provided at the center of said moving block (21); when said moving block (21) is placed into said chamber (103), said central axle (213) is engaged in said slot-shape grooves (104, 111) separately of said cover plate (11) and said main body (10), so as to keep said moving block (21) in position; by mutual constraint of said central axle (213) and said slot-shape grooves (104, 111), said moving block (21) is able to conduct limited up-down movement in said chamber (103); further, said moving block (21) has two first engagement holes (214) provided on the upper edge thereof and spaced apart equally from the center of the upper edge, and a second engagement hole (215) provided on the center of the bottom edge; escape chamfers (216) provided on the bottom edge of said moving block (21) are separately provided on both sides of said second engagement hole (215); said rotary piece (22) has a pivot slot (221) provided at the center thereof and extending upward, and a third engagement hole (222) provided at the bottom portion thereof; said rotary piece (22) is pivotally connected with said moving block (21) in the chamber (103) of the main body (10) by inserting the central axle (213) through said pivot slot (221) of said rotary piece (22); under pivot connection with said moving block (21), said rotary piece (22) abuts on said front end portion (211) of said moving block (21) so as to be adjacent to said cover plate (11); each control cable (30) has a control wire (31) encapsulated therein, said two control wires (31) are coupled separately to brake levers at one end and locked separately in said two first engagement holes (214) of said moving block (21) at the other end after being pulled into said chamber (103) through said two first through holes (105) of the main body (10);
said rear wheel brake cable (40) has a rear wheel brake wire (41) encapsulated therein, said rear wheel brake wire (41) is coupled to said rear wheel brake at one end and locked in said second engagement hole (215) of said moving block (21) at the other end after being pulled into said chamber (103) from said second through hole (215) of the main body (10);
said front wheel brake cable (400) has a front wheel brake wire (401) encapsulated therein, said front wheel brake wire (401) is coupled to the front wheel brake at one end and locked in said third engagement hole (222) of said rotary piece (22) at the other end after being pulled into said chamber (103) from said third through hole (107) of the main body (10).

2. The bicycle brake assist as claimed in claim 1, wherein said second through hole (106) and said third through hole (107) of said main body (10) are provided respectively with an adjustment thread (12).

3. The bicycle brake assist as claimed in claim 1, wherein said slot-shape grooves (104, 111) of said main body (10) and said cover plate (11) are provided respectively with a wire insertion hole (108, 112) on their distal ends.

4. The bicycle brake assist as claimed in claim 1, wherein said first through holes (105) are formed by opposite engagement of said main body (10) and said cover plate (11).

## Patentansprüche

1. Fahrradbremsassistent, welcher einen Hauptkörper (10), eine Zugvorrichtung (20), zwei Steuerkabel (30), ein Hinterradbremskabel (40) und ein Vorderradbremskabel (400) umfasst, wobei die Zugvorrichtung (20) einen Bewegungsblock (21) und ein Drehteil (22) aufweist, welche schwenkbar miteinander verbunden sind,
**dadurch gekennzeichnet, dass**
der Hauptkörper (10) eine erste Oberfläche (101) und eine zweite Oberfläche (102) aufweist, wobei die erste Oberfläche (101) mit einer Kammer (103) versehen ist, welche in Richtung des Innenraums des Hauptkörpers (10) vertieft ist, wobei, wenn die Zugvorrichtung (20) in der Kammer (103) montiert ist und die Steuerkabel (30), das Hinterradbremskabel (40) und das Vorderradbremskabel (400) angeschlossen sind, eine Abdeckplatte (11) mit der ersten Oberfläche (101) verbunden ist, um die Kammer (103) zu verschließen, wobei zwei einander gegenüberliegende schlitzförmige Nuten (104, 111) voneinander getrennt mittig an der Abdeckplatte (11) und mittig an dem Hauptkörper (10) vorgesehen sind, wobei zwei erste Durchgangslöcher (105), die mit der Kammer (10) kommunizieren und in einer linken und rechten Richtung zueinander benachbart sind, an der Oberseite des Hauptkörpers (10) vorgesehen sind, wobei ein zweites Durchgangsloch (106) und ein drittes Durchgangsloch (107), die mit der Kammer (103) kommunizieren und in einer vorderen und hinteren Richtung zueinander benachbart sind, an der Unterseite des Hauptkörpers (10) vorgesehen sind, wobei der Bewegungsblock (21) einen Frontendabschnitt (211) und einen Rückseitenendabschnitt (212) aufweist, und wobei eine Zentralachse (213), die von dem Front- und Rückseitenendabschnitt (211, 212) hervorsteht, mittig an dem Bewegungsblock (21) vorgesehen ist, wobei, wenn der Bewegungsblock (21) im Inneren der Kammer (103) platziert ist, die Zentralachse (213) separat in den schlitzförmigen Nuten (104, 111) der Abdeckplatte (11) und des Hauptkörpers (10) eingerastet ist, wodurch der Bewegungsblock (21) in seiner Position gehalten wird, wobei durch die gegenseitige Beschränkung der Zentralachse (213) und der schlitzförmigen Nuten (104, 111) der Bewegungsblock (21) eine begrenzte Auf-Abwärtsbewegung in der Kammer (103) ausführen kann, wobei der Bewegungsblock (21) außerdem zwei erste Eingriffslöcher (214), die an dem oberen Rand davon vorgesehen sind und den gleichen Abstand von der Mitte des oberen Rands haben, und ein zweites Eingriffsloch (215) hat, das mittig an dem unteren Rand vorgesehen ist, wobei Austrittsschrägen (216), die an dem unteren Rand des Bewegungsblocks (21) vorgesehen sind, getrennt voneinander an beiden Seiten des zweiten Eingriffslochs (215) ausgebildet sind, wobei das Drehteil (22) einen Schwenkschlitz (221) aufweist, der mittig daran ausgebildet ist und sich nach oben erstreckt, und wobei ein drittes Eingriffsloch (222) an dem Bodenabschnitt davon ausgebildet ist, wobei das Drehteil (22) dadurch schwenkbar mit dem Bewegungsblock (21) in der Kammer (103) des Hauptkörpers (10) verbunden ist, dass die Zentralachse (213) durch den Schwenkschlitz (221) des Drehteils (22) gesteckt ist, wobei das Drehteil (22) unter der Schwenkverbindung mit dem Bewegungsblock (21) an dem Frontendabschnitt (211) des Bewegungsblocks (21) anliegt, um an die Abdeckplatte (11) anzugrenzen, wobei jedes Steuerkabel (30) darin einen ummantelten Steuerdraht (31) aufweist, wobei die zwei Steuerdrähte (31) mit einem Ende separat mit Bremshebeln gekoppelt sind und mit dem anderen Ende nach dem Hineinziehen in die Kammer (103) durch die zwei ersten Durchgangslöcher (105) des Hauptkörpers (10) separat in den zwei ersten Eingriffslöchern (214) des Bewegungsblocks (21) arretiert sind,
wobei das Hinterradbremskabel (40) darin einen ummantelten Hinterradbremsdraht (41) aufweist, wobei der Hinterradbremsdraht (41) mit einem Ende mit der Hinterradbremse gekoppelt ist und sein anderes Ende nach dem Hineinziehen in die Kammer (103) durch das zweite Durchgangsloch (215) des Hauptkörpers (10) in dem zweiten Eingriffsloch (215) des Bewegungsblocks (21) arretiert ist, wobei das Vorderradbremskabel (400) darin einen ummantelten Vorderradbremsdraht (401) aufweist, wobei der Vorderradbremsdraht (401) mit einem Ende mit der Vorderradbremse gekoppelt ist und sein anderes Ende nach dem Hineinziehen in die Kammer (103) durch das dritte Durchgangsloch (107) des Hauptkörpers (10) in dem dritten Eingriffsloch (222) des Drehteils (22) arretiert ist.

2. Fahrradbremsassistent nach Anspruch 1, bei welchem das zweite Durchgangsloch (106) und das dritte Durchgangsloch (107) des Hauptkörpers (10) jeweils mit einem Einstellgewinde (12) versehen sind.

3. Fahrradbremsassistent nach Anspruch 1, bei welchem die schlitzförmigen Nuten (104, 111) des Hauptkörpers (10) und der Abdeckplatte (11) an ihren distalen Enden jeweils mit einem Drahteinsteckloch (108, 112) ausgebildet sind.

4. Fahrradbremsassistent nach Anspruch 1, bei welchem die ersten Durchgangslöcher (105) durch einen gegenseitigen Eingriff des Hauptkörpers (10) und der Abdeckplatte (11) ausgebildet sind.

## Revendications

1. Assistance au freinage de bicyclette comprenant un corps principal (10), un dispositif de traction (20), deux câbles de commande (30), un câble de frein de roue arrière (40) et un câble de frein de roue avant (400), dans laquelle ledit dispositif de traction (20) présente un bloc mobile (21) et une pièce rotative (22) raccordés de manière pivotante l'un à l'autre,
**caractérisée en ce que**
ledit corps principal (10) présente une première surface (101) et une seconde surface (102), ladite première surface (101) étant dotée d'une chambre (103) qui est enfoncée vers l'intérieur dudit corps principal (10); lorsque ledit dispositif de traction (20) est installé dans ladite chambre (103) et lesdits câbles de commande (30), ledit câble de frein de roue arrière (40) et ledit câble de frein de roue avant (400) sont raccordés en place, une plaque de couvercle (11) est combinée à ladite première surface (101) pour enfermer ladite chambre (103); deux rainures en forme de fente (104, 111) opposées l'une à l'autre sont prévues séparément sur le centre de ladite plaque de couvercle (11) et le centre dudit corps principal (10); deux premiers trous débouchants (105) communiquant avec ladite chambre (10) et mutuellement adjacents l'un à l'autre dans la direction gauche et droite sont prévus sur le côté supérieur dudit corps principal (10); et un deuxième trou débouchant (106) et un troisième trou débouchant (107) communiquant avec ladite chambre (103) et adjacents l'un à l'autre dans la direction avant et arrière sont prévus sur le côté inférieur dudit corps principal (10);
ledit bloc mobile (21) présente une portion d'extrémité avant (211) et une portion d'extrémité arrière (212), et un essieu central (213) faisant saillie hors desdites portions d'extrémité avant et arrière (211, 212) est prévu au centre dudit bloc mobile (21); lorsque ledit bloc mobile (21) est placé dans ladite chambre (103), ledit essieu central (213) est mis en prise dans lesdites rainures en forme de fente (104, 111) séparément de ladite plaque de couvercle (11) et dudit corps principal (10) de sorte à maintenir ledit bloc mobile (21) en position; par contrainte mutuelle dudit essieu central (213) et desdites rainures en forme de fente (104, 111), ledit bloc mobile (21) est apte à conduire le mouvement vers le haut-le bas limité dans ladite chambre (103); en outre, ledit bloc mobile (21) présente deux premiers trous de mise en prise (214) prévus sur l'arête supérieure de celui-ci et espacés également du centre de l'arête supérieure, et un deuxième trou de mise en prise (215) prévu sur le centre de l'arête inférieure; des chanfreins de fuite (216) prévus sur l'arête inférieure dudit bloc mobile (21) sont prévus séparément sur les deux côtés dudit deuxième trou de mise en prise (215); ladite pièce rotative (22) présente une fente de pivotement (221) prévue sur le centre de celle-ci et s'étendant vers le haut, et un troisième trou de mise en prise (222) prévu sur la portion inférieure de celui-ci; ladite pièce rotative (22) est raccordée de manière pivotante audit bloc mobile (21) dans la chambre (103) du corps principal (10) par insertion de l'essieu central (213) au travers de ladite fente de pivotement (221) de ladite pièce rotative (22); par raccordement pivotant avec ledit bloc mobile (21), ladite pièce rotative (22) bute contre ladite portion d'extrémité avant (211) dudit bloc mobile (21) de sorte à être adjacente à ladite plaque de couvercle (11); chaque câble de commande (30) présente un fil de commande (31) encapsulé dans celui-ci, lesdits deux fils de commande (31) sont séparément couplés aux leviers de freinage à une extrémité et séparément verrouillés dans lesdits deux premiers trous de mise en prise (214) dudit bloc mobile (21) à l'autre extrémité après avoir été tirés dans ladite chambre (103) au travers desdits deux premiers trous débouchants (105) du corps principal (10);
ledit câble de frein de roue arrière (40) présente un fil de frein de roue arrière (41) encapsulé dans celui-ci, ledit fil de frein de roue arrière (41) est couplé audit frein de roue arrière à une extrémité et verrouillé dans ledit deuxième trou de mise en prise (215) dudit bloc mobile (21) à l'autre extrémité après avoir été tiré dans ladite chambre (103) dudit deuxième trou débouchant (215) du corps principal (10);
ledit câble de frein de roue avant (400) présente un fil de frein de roue avant (401) encapsulé dans celui-ci, ledit fil de frein de roue avant (401) est couplé au frein de roue avant à une extrémité et verrouillé dans ledit troisième trou de mise en prise (222) de ladite pièce rotative (22) à l'autre extrémité après avoir été tiré dans ladite chambre (103) dudit troisième trou débouchant (107) du corps principal (10).

2. Assistance au freinage de bicyclette selon la revendication 1, dans laquelle ledit deuxième trou débouchant (106) et ledit troisième trou débouchant (107) dudit corps principal (10) sont dotés respectivement d'un filet d'ajustement (12).

3. Assistance au freinage de bicyclette selon la revendication 1, dans laquelle lesdites rainures en forme de fente (104, 111) dudit corps principal (10) et de ladite plaque de couvercle (11) sont dotées respectivement d'un trou d'insertion de fil (108, 112) sur leurs extrémités distales.

4. Assistance au freinage de bicyclette selon la revendication 1, dans laquelle lesdits premiers trous débouchants (105) sont formés par mise en prise opposée dudit corps principal (10) et de ladite plaque de couvercle (11).
